# EUROPÄISCHE PATENTSCHRIFT

(11) **EP 3 458 899 B1**
(45) Veröffentlichungstag und Bekanntmachung des Hinweises auf die Patenterteilung: **06.04.2022**
(21) Anmeldenummer: 17714162.9
(22) Anmeldetag: 20.03.2017
(51) Int. Cl.: G02B 27/01, C03C 17/36, B32B 17/10

(54) **HEAD-UP-DISPLAY SYSTEM**
HEAD-UP DISPLAY SYSTEM
HEAD-UP-DISPLAY SYSTEM

(30) Priorität: 17.05.2016 EP 16169824
(43) Veröffentlichungstag der Anmeldung: 27.03.2019
(73) Patentinhaber: SAINT-GOBAIN GLASS FRANCE, 92400 Courbevoie (FR)
(72) Erfinder: FISCHER, Klaus, 52477 Alsdorf (DE); KUEHNE, Matthias, 04860 Torgau (DE); HORNSCHUH, Sandra, 04860 Torgau (DE); ZIMMERMANN, Roberto, 42653 Solingen (DE); HENSELER, Martin, 78315 Radolfzell (DE); SCHAEFER, Dagmar, 52134 Herzogenrath (DE); JANSEN, Michael, 52249 Eschweiler (DE)
(74) Vertreter: Weber, Sophie
(86) Internationale Anmeldenummer: PCT/EP2017/056480
(87) Internationale Veröffentlichungsnummer: WO 2017/198363

(56) Entgegenhaltungen:
- EP-A2- 2 131 227
- WO-A1-2011/020974
- WO-A1-2012/052315
- WO-A1-2012/140098
- DE-A1- 4 227 582

## Beschreibung

Die Erfindung betrifft ein Head-Up-Display System umfassend eine bildgebende Einheit zur Erzeugung eines Bildes und eine Projektionsfläche. Weiterhin betrifft die Erfindung ein Kraftfahrzeug mit einem Head-Up-Display System, ein Verfahren zur Erzeugung eines Bildes auf einer Projektionsfläche mittels eines Head-Up-Display Systems und eine Verwendung des Head-Up-Systems.

An die Verglasung von Kraftfahrzeugen werden hohe Anforderungen gestellt. Hinsichtlich der Größe des Sichtbereichs und der strukturellen Stabilität der Scheiben gelten folgende gesetzlichen Vorschriften:
- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Die Scheibe kann eine elektrische Heizfunktion aufweisen, die auf transparenten, elektrischen Beschichtungen basiert. Solche elektrisch leitfähige Beschichtungen können mehrere metallische und dielektrische dünne Schichten aufweisen. Beschichtungen auf der Basis von dünnen Silberschichten sind kostengünstig herstellbar und alterungsstabil. Die Schichten weisen in der Regel Flächenwiderstände im Bereich von 3 Ohm/Quadrat bis 5 Ohm/Quadrat auf.

Zusätzlich können Fahrzeuge mit einer sogenannte Head-Up-Display (HUD; "Kopfoben-Anzeige") Technologie ausgestattet sein. Ein Head-Up-Display ist ein Anzeigesystem, welches dem Fahrer eines Fahrzeugs in sein Sichtfeld zusätzliche Informationen in Form von Bildern projiziert. Das Head-Up-Display System besteht aus einer bildgebenden Einheit und mehreren Optikmodulen zur Umlenkung bzw. Spiegelung (Reflektion) eines Bildes auf eine Projektionsfläche bzw. Reflektionsfläche. Dabei dient üblicherweise eine Verbundscheibe, insbesondere die Windschutzscheibe des Fahrzeugs, als Projektionsfläche. Obwohl das Bild auf die Windschutzscheibe projiziert wird, schwebt es in der Wahrnehmung des menschlichen Auges des Fahrers entfernt über der Motorhaube des Fahrzeugs.

Üblicherweise besteht das durch die bildgebende Einheit erzeugte Bild aus polarisiertem Licht. Das s-polarisierte Licht trifft unter einem bestimmten Einfallswinkel auf die Verbundscheibe und wird zumindest teilweise sowohl in die Verbundscheibe hinein gebrochen als auch als s-polarisiertes Licht in das Sichtfeld des Fahrers reflektiert. Allerdings werden die reflektierten Bilder nicht farbecht oder mit unerwünschter Reflektion, sogenannten Doppelbildern, dargestellt.

DE102011075887A1 offenbart ein Head-up-Display mit einer Bilderzeugungseinheit, die eine Hinterleuchtungseinheit und eine Flüssigkristallanzeigeeinheit umfasst, die zur Erzeugung sichtbarer Bilder von der Ansteuereinheit angesteuert und vom Licht der Hinterleuchtungseinheit durchleuchtet wird.

EP2131227A2 offenbart eine Windschutzscheibe mit einer antireflektierenden Beschichtung. Die Windschutzscheibe besteht aus zwei Substraten, die über eine Zwischenschicht miteinander verbunden sind. Auf einer Oberfläche eines der Substrate ist die antireflektierende Beschichtung aufgebracht. Diese Beschichtung ist so angeordnet, dass sie einen Teil der Lichtstrahlen, die von einer Bildquelle eines Head-Up-Display-Systems erzeugt werden, optisch entfernt oder blockiert.

WO 2012/052315 A1 offenbart farbneutrale elektrisch beheizbare Beschichtungen für Fahrzeuge.

Die Aufgabe der vorliegenden Erfindung besteht darin, ein Head-Up-Display System bereitzustellen, das die Projektion der Bilder verbessert.

Die Aufgabe der vorliegenden Erfindung wird erfindungsgemäß durch ein Head-Up-Display System mit einer bildgebenden Einheit zur Erzeugung eines Bildes und einer Reflektionsfläche gemäß Anspruch 1 gelöst. Bevorzugte Ausführungen gehen aus den Unteransprüchen hervor. Ein Kraftfahrzeug mit einem Head-Up-Display System, ein Verfahren zur Erzeugung eines Bildes auf einer Projektionsfläche mittels eines Head-Up-Display Systems gehen aus weiteren Ansprüchen hervor.

Das erfindungsgemäße Head-Up-Display System umfasst eine bildgebende Einheit zur Erzeugung eines Bildes auf einer Projektionsfläche, wobei die Projektionsfläche zur Reflexion zumindest ein Teil des Bildes vorgesehen ist und eine transparente Scheibe mit einem transparenten Substrat und mindestens einer elektrisch leitfähigen Beschichtung mit mindestens einer funktionellen Schicht auf mindestens einer Oberfläche des transparenten Substrats umfasst.

In einer bevorzugten Ausführungsform des erfindungsgemäßen Head-Up-Display Systems ist vorteilhaft vorgesehen, dass die bildgebende Einheit s-polarisiertes Licht emittiert, welches vom Optikmodul umgelenkt wird und in Richtung eines Fahrzeugfahrers an der Projektionsfläche reflektiert wird. Die Projektionsfläche kann eine Windschutzscheibe eines Fahrzeugs sein. Derartige Projektionsflächen reflektieren das von der bildgebenden Einheit erzeugte Bild, so dass sie auch als Reflexionsflächen bezeichnet werden können.

In einer weiteren Ausgestaltung des erfindungsgemäßen Head-Up-Display Systems trifft das vom Optikmodul umgelenkte Licht mit einem Einfallswinkel von ca. 55° bis 70°, vorzugsweise 65°, auf die Projektionsfläche. Alternativ kann das von der benden Einheit emittierte Licht direkt mit einem Einfallswinkel von ca. 55° bis 70°, auf die Projektionsfläche fallen.

Es ist möglich, dass die elektrisch leitfähige Beschichtung mehrere übereinander angeordnete funktionelle Schichten aufweist. Beispielsweise können vier funktionelle Schichten übereinander angeordnet sein. Die Erfinder haben überraschend erkannt, dass mit vier funktionellen Schichten hinsichtlich der Farbneutralität besonders gute Ergebnisse erzielt werden.

Vorzugsweise kann jede funktionelle Schicht mindestens eine elektrisch leitfähige Schicht umfassen. Jede elektrisch leitfähige Schicht kann die gleiche Schichtdicke aufweisen. Alternativ kann die elektrisch leitfähige Schicht eine Schichtdicke aufweisen, die halb so groß ist wie die Schichtdicke einer zweiten elektrisch leitfähigen Schicht.

Die Schichtdicke jeweils einer der elektrisch leitfähige Schichten kann von 5 nm bis 25 nm und die Gesamtschichtdicke aller elektrisch leitfähig Schichten kann von 20 nm bis 100 nm betragen. Zumindest eine zwischen zwei elektrisch leitfähigen Schichten angeordnete Schicht optisch hochbrechenden Materials kann eine Schicht eines dielektrischen Materials mit einem Brechungsindex kleiner oder gleich 2,1 und eine Schicht eines optisch hochbrechenden Materials mit einem Brechungsindex größer oder gleich 2, 1 umfassen.

Ist eine erste Schicht oberhalb einer zweiten Schicht angeordnet, so bedeutet dies im Rahmen der vorliegenden Erfindung, dass die erste Schicht weiter von dem Substrat, auf das die Schichten aufgebracht sind, entfernt angeordnet ist als die zweite Schicht.

Ist eine erste Schicht unterhalb einer zweiten Schicht angeordnet ist, so bedeutet dies im Rahmen der vorliegenden Erfindung, dass die zweite Schicht weiter von dem Substrat, auf das die Schichten aufgebracht sind, entfernt angeordnet ist als die erste Schicht.

Die Gesamtschichtdicke aller elektrisch leitfähigen Schichten der gesamten elektrisch leitfähigen Beschichtung beträgt erfindungsgemäß von 20 nm bis 100 nm. In diesem vorteilhaften Bereich für die Gesamtdicke aller silberhaltigen Schichten wird bei typischen Abständen h zwischen zwei Sammelleitern und einer Betriebsspannung U von 12 V bis 15 V vorteilhaft eine ausreichend hohe Heizleistung P und eine ausreichend hohe Transmission erreicht.

Jede funktionelle Schicht der erfindungsgemäßen elektrischen leitfähigen Beschichtung weist zumindest eine zwischen zwei elektrisch leitfähigen Schichten angeordnete Schicht optisch hochbrechenden Materials auf, die eine Schicht eines dielektrischen Materials mit einem Brechungsindex kleiner oder gleich 2,1 und eine Schicht eines optisch hochbrechenden Materials mit einem Brechungsindex größer oder gleich 2, 1 umfasst.

Es hat sich überraschend gezeigt, dass eine solche Beschichtung zu einer hohen Farbneutralität und gewünschten Transmission des Lichts führt, indem die Reflektion des Bildes an der Beschichtung selbst so klein wie möglich und farbneutral gehalten wird.

Eine Schicht optisch hochbrechenden Materials liegt im Sinne der Erfindung zwischen zwei elektrisch leitfähigen Schichten, wenn zumindest eine elektrisch leitfähige Schicht oberhalb der Schicht optisch hochbrechenden Materials und wenn eine elektrisch leitfähige Schicht unterhalb der Schicht optisch hochbrechenden Materials angeordnet ist. Diese Anordnung erfordert aber nicht einen direkten Kontakt zwischen der elektrisch leitfähigen Schicht und der Schicht optisch hochbrechenden Materials.

Eine Schicht im Sinne der Erfindung kann aus einem Material bestehen. Eine Schicht kann aber auch zwei oder mehrere Einzelschichten unterschiedlichen Materials umfassen. Eine erfindungsgemäße funktionelle Schicht umfasst beispielsweise zumindest eine Schicht optisch hochbrechenden Materials, eine erste und eine zweite Anpassungsschicht und eine elektrisch leitfähige Schicht.

Vorzugsweise kann die erste und/oder die zweite Anpassungsschicht ein Zinkoxid enthalten.

Eine bevorzugte Ausführung der Erfindung sieht vor, dass die Dicke der Schicht optisch hochbrechenden Materials 10 nm bis 100 nm betragen kann, wobei eine zwischen zwei elektrisch leitfähigen Schichten angeordneten Schicht optisch hochbrechenden Materials mindestens eine Dicke von 20 nm aufweist. Des weiteren kann die Schicht hochbrechenden Material einen Brechungsindex größer oder gleich 1,9 aufweisen und/oder zumindest Siliziumnitrid oder Silizium-Metall-Mischnitrid, wie SiZrN und Gemische davon enthalten.

In einer besonders bevorzugten Ausgestaltung der erfindungsgemäßen transparenten Scheibe enthält die Schicht optisch hochbrechenden Materials ein Silizium-Zirkonium-Mischnitrid. Das Silizium-Zirkonium-Mischnitrid wird bevorzugt mit einem Target abgeschieden, welches von 40 Gew. % bis 70 Gew. % Silizium, von 30 Gew. % bis 60 Gew. % Zirkonium sowie herstellungsbedingte Beimengungen enthält. Das Target enthält besonders bevorzugt von 45 Gew. % bis 60 Gew. % Silizium, von 40 Gew. % bis 55 Gew. % Zirkonium sowie herstellungsbedingte Beimengungen. Die Abscheidung des Silizium-Zirkonium-Mischnitrids erfolgt unter Zugabe von Stickstoff als Reaktionsgas während der Kathodenzerstäubung.

Eine weitere bevorzugte Ausgestaltung der erfindungsgemäßen transparenten Scheibe sieht eine Glättungsschicht vor, die zumindest zwischen zwei elektrisch leitfähigen Schichten, insbesondere unterhalb einer der ersten Anpassungsschichten, angeordnet sein kann. Dabei kann die Glättungsschicht ein Zinn-Zink-Mischoxid enthalten. Eine auf eine glattere Oberfläche abgeschiedene elektrisch leitfähige Schicht weist einen höheren Transmissionsgrad bei einem gleichzeitig niedrigeren Flächenwiderstand auf. Dieser Effekt ist umso günstiger, je dünner die elektrisch leitfähige Schicht ist.

In einer weiteren bevorzugten Ausgestaltung der erfindungsgemäßen transparenten Scheibe ist oberhalb der obersten funktionellen Schicht eine weitere Schicht optisch hochbrechenden Materials mit einem Brechungsindex ≥ 1,9 vorgesehen. Diese Schicht kann Siliziumnitrid als optisch hochbrechendes Material enthalten. Die Verwendung von Siliziumnitrid schützt die darunter angeordneten Schichten vor Korrosion, passt die optischen Eigenschaften der funktionellen Schichten an die der Zwischenschicht an und ist besonders kostengünstig.

In einer besonders bevorzugten Ausgestaltung der erfindungsgemäßen transparenten Scheibe weist die elektrisch leitfähige Schicht zumindest Silber oder eine silberhaltige Legierung auf. Die silberhaltigen Schichten enthalten mindestens 90 Gew. % Silber, bevorzugt 99,9 Gew. %. Die silberhaltigen Schichten werden mit gängigen Verfahren zur Schichtabscheidung von Metallen, beispielsweise durch Vakuumverfahren wie die magnetfeldunterstützte Kathodenzerstäubung aufgebracht.

Die Schichtdicken der Anpassungsschicht, der Glättungsschicht, der Schicht optisch hochbrechenden Materials und der silberhaltigen Schicht mit den gewünschten Eigenschaften hinsichtlich Transmission, Flächenwiderstand und Farbwerten ergeben sich für den Fachmann in einfacher Weise durch Simulationen im Bereich der oben angegebenen Schichtdicken.

In einer vorteilhaften Ausgestaltung der erfindungsgemäßen transparenten Scheibe erstreckt sich die elektrisch beheizbare Beschichtung auf mindestens 50%, bevorzugt auf mindestens 70% und besonders bevorzugt auf mindestens 90% der Fläche der Seite der Scheibe, auf die sie aufgebracht ist.

Des weiteren weist zumindest eine funktionelle Schicht eine an die elektrisch leitfähige Schicht angrenzende Blockerschicht auf und die Blockerschicht enthält bevorzugt zumindest Nickel, Chrom oder Legierungen davon.

Dabei kann die Blockerschicht eine Dicke von 0,1 nm bis 5 nm aufweisen. Die Blockerschicht zwischen zweiter Anpassungsschicht und der silberhaltigen Schicht verhindert den Kontakt der empfindlichen silberhaltigen Schicht mit der oxidierenden reaktiven Atmosphäre während der Abscheidung der folgenden Schicht aus Zinkoxid durch reaktive Kathodenzerstäubung.

Die Anpassungsschicht, die Glättungsschicht, die Schicht optisch hochbrechenden Materials, die Blockerschicht und die silberhaltige Schicht werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff. Das transparente Substrat kann über eine thermoplastische Zwischenschicht mit einer zweiten Scheibe zu einer Verbundscheibe verbunden sein und dabei eine Gesamttransmission größer als 70 % aufweisen. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Verbundscheibe und/oder die Zwischenschicht können einen keilförmigen Querschnitt aufweisen. Der keilförmige Querschnitt bewirkt, dass bei einer Reflexion die Entstehung von zusätzlichen, unerwünschten Doppelbildern reduziert wird. Die Verbundscheibe ist derart ausgebildet, dass s-polarisiertes Licht verstärkt reflektiert wird.

Die elektrisch beheizbare Beschichtung erstreckt sich bevorzugt über die gesamte Fläche der Seite der Scheibe, auf die sie aufgebracht ist, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich kann die elektrisch beheizbare Beschichtung in einem weiteren Bereich entschichtet sein, der beispielsweise als Datenübertragungsfenster oder Kommunikationsfenster dient. Die transparente Scheibe ist in dem weiteren entschichteten Bereich für elektromagnetische und insbesondere infrarote Strahlung durchlässig.

In einer bevorzugten Ausgestaltung der erfindungsgemäßen transparenten Scheibe ist die elektrisch beheizbare Beschichtung über Sammelleiter mit einer Spannungsquelle verbunden und eine an die elektrisch beheizbare Beschichtung angelegte Spannung weist einen Wert von 12 V bis 15 V auf.

Die transparente, elektrisch leitfähige Beschichtung ist mit Sammelleitern, sogenannten bus bars, zur Übertragung elektrischer Leistung verbunden.

Die Sammelleiter werden vorteilhaft durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt bevorzugt von 5 µm bis 20 µm.

In einer alternativen Ausgestaltung der Sammelleiter werden dünne und schmale Metallfolienstreifen oder Metalldrähte verwendet, die bevorzugt Kupfer und/oder Aluminium enthalten, insbesondere werden Kupferfolienstreifen mit einer Dicke von etwa 50 µm verwendet. Die Breite der Kupferfolienstreifen beträgt bevorzugt 1 mm bis 10 mm. Die Metallfolienstreifen oder Metalldrähte werden beim Zusammenlegen der Verbundschichten auf die Beschichtung aufgelegt. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann alternativ durch Auflöten oder Kleben mit einem elektrisch leitfähigen Kleber hergestellt werden.

Als Zuleitung zur Kontaktierung von Sammelleitern im Innern von Verbundscheiben werden im Fahrzeugbereich üblicherweise Folienleiter verwendet. Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Klebeschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer bevorzugten Ausgestaltung der erfindungsgemäßen transparenten Scheibe weist die elektrisch beheizbare Beschichtung eine Heizleistung von 500 W/m² bis 700 W/m² auf.

Die Erfindung umfasst auch ein Kraftfahrzeug mit einem erfindungsgemäßen Head-Up-Display System.

Weiterhin betrifft die Erfindung ein Verfahren zur Erzeugung eines Bildes auf einer Projektionsfläche mittels eines Head-Up-Display Systems, wobei als Projektionsfläche eine transparente Scheibe umfassend ein transparentes Substrat und mindestens eine elektrisch leitfähige Beschichtung mit einer funktionellen Schicht auf mindestens einer Oberfläche des transparenten Substrats verwendet wird.

Die einzelnen Schichten werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Die Schichtdicken der einzelnen Schichten mit den gewünschten Eigenschaften hinsichtlich Transmission, Flächenwiderstand und Farbwerten ergeben sich für den Fachmann durch Simulationen im Bereich der oben angegebenen Schichtdicken.

In einer vorteilhaften Ausführung der Erfindung wird das transparente Substrat und eine zweite Scheibe auf eine Temperatur von 500°C bis 700°C erhitzt und das transparente Substrat und die zweite Scheibe mit einer thermoplastischen Zwischenschicht flächendeckend verbunden. Das Erhitzen der Scheibe kann im Rahmen eines Biegeprozesses erfolgen. Die elektrisch leitfähige Beschichtung muss insbesondere geeignet sein, den Biegeprozess und / oder den Verbundprozess ohne Beschädigungen zu überstehen. Die Eigenschaften, insbesondere der Flächenwiderstand der oben beschriebenen elektrisch leitfähigen Beschichtung verbessern sich regelmäßig durch die Erhitzung.

Die elektrisch leitfähige Beschichtung kann vor dem Erhitzen des Substrats mit mindestens zwei Sammelleitern verbunden werden.

Die Erfindung umfasst weiter die Verwendung des erfindungsgemäßen Head-Up-Display Systems in Fahrzeugen, insbesondere in Kraftfahrzeugen.

Im Folgenden wird die Erfindung anhand einer Zeichnung und eines Beispiels näher erläutert. Die Zeichnung ist eine schematische Darstellung und nicht maßstabsgetreu. Die Zeichnung schränkt die Erfindung in keiner Weise ein.

Es zeigen:
- Figur 1: schematische Seitenansicht eines Strahlengangs an einem erfindungsgemäßen Head-Up-Display System mit einer Verbundscheibe
- Figur 2: eine Draufsicht auf eine erfindungsgemäße transparente Scheibe als Teil einer Verbundscheibe, und

- Figur 3: eine Querschnittszeichnung entlang der Schnittlinie A-A' in Figur 2
- Figur 4: einen Querschnitt durch eine Ausgestaltung der transparenten Scheibe mit elektrisch leitfähiger Beschichtung.

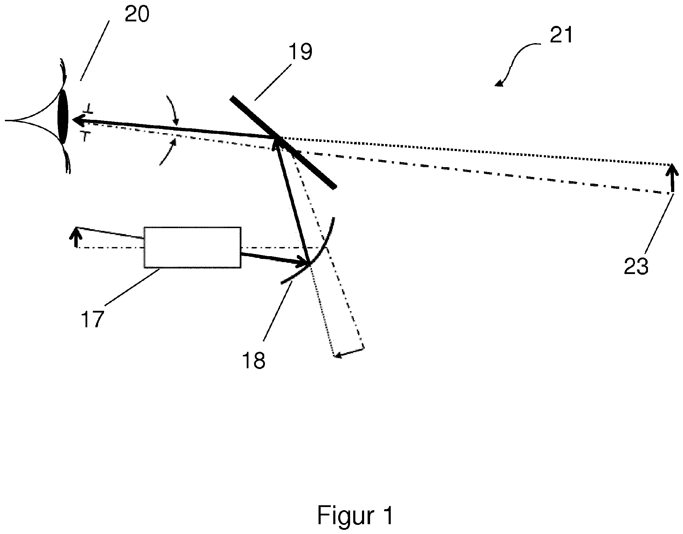

Figur 1 zeigt ein erfindungsgemäßes Head-Up-Display System 21 mit einer transparenten Scheibe als Teil einer Verbundscheibe 19. Die Verbundscheibe 19 ist als Windschutzscheibe eines Personenkraftwagens (PKW) vorgesehen. Das Head-Up-Display System 21 umfasst eine bildgebende Einheit 17, ein Optikmodul 18 und die Verbundscheibe 19 als Projektionsfläche des Head-Up-Display Systems 21.

Die bildgebende Einheit 17 ist ein TFT - Projektor oder ein LCD-Display, der zur Generierung eines Bildes vorgesehen ist. Das Optikmodul 18 ist zur Umlenkung des durch die bildgebende Einheit 17 generieten Bildes vorgesehen und kann als Spiegel oder ein sogenannter Combiner ausgebildet sein. Die Verbundscheibe 19 weist die transparente Scheibe mit einer elektrisch leitfähigen Beschichtung 2 auf und dient als Projektionsfläche des umgelenkten Bildes.

Ein Fahrer 20 eines PKWs sitzt im Innenraum des PKWs, das mit dem erfindungsgemäßen Head-Up-Display System 21 ausgestattet ist. Das Head-Up-Display System 21 projiziert ein virtuelles Bild 23 in das Blickfeld des Fahrers, indem die bildgebende Einheit 17 ein Bild erzeugt und das Bild durch das Optikmodul 18 auf die Verbundscheibe 19 lenkt.

Polarisiertes Licht lässt sich in zwei zueinander senkrecht linear polarisierte Anteile zerlegen. Der senkrecht bzw. parallel linear polarisierter Anteil wird auch als s- bzw. p-Polarisation bezeichnet.

Das durch die bildgebenden Einheit 17 erzeugte Bild weist s-polarisiertes (senkrechte Polarisation in der Einfallsebene) Licht auf. Das vom Optikmodul umgelenkte s-polarisierte Licht fällt mit einem Einfallswinkel von ca. 65° auf die Verbundscheibe 19. Das s-polarisierte Licht wird an den Grenzflächen der Verbundscheibe 19 zur Luft in Richtung des Fahrers reflektiert. Die Verbundscheibe 19 reflektiert das s-polarisierte Licht deutlich stärker als p-polarisiertes (parallele Polarisation in der Einfallsebene) Licht.

Dabei bildet die dem Innenraum zugewandte Innenseite der Verbundscheibe eine innere Grenzfläche zu der Luft im Innenraums des PKWs und die abgewandte Außenseite der Verbundscheibe 19 bildet eine äußere Grenzfläche zu der Umgebungsluft des PKWs. Die Verbundscheibe 19 weist einen keilförmigen Querschnitt auf, so dass das Licht derart reflektiert wird, das die an den beiden Grenzflächen reflektierten Bilder ein einzelnes virtuelles Bild 23 im Auge des Fahrers ergeben.

Das virtuelle Bild 23 erscheint im Auge des Fahrers als scharfes, gut erkennbares und farbgetreues Bild. In der Wahrnehmung des menschlichen Auges des Fahrers schwebt das projizierte, virtuelle Bild 23 entfernt über der Motorhaube des PKWs.

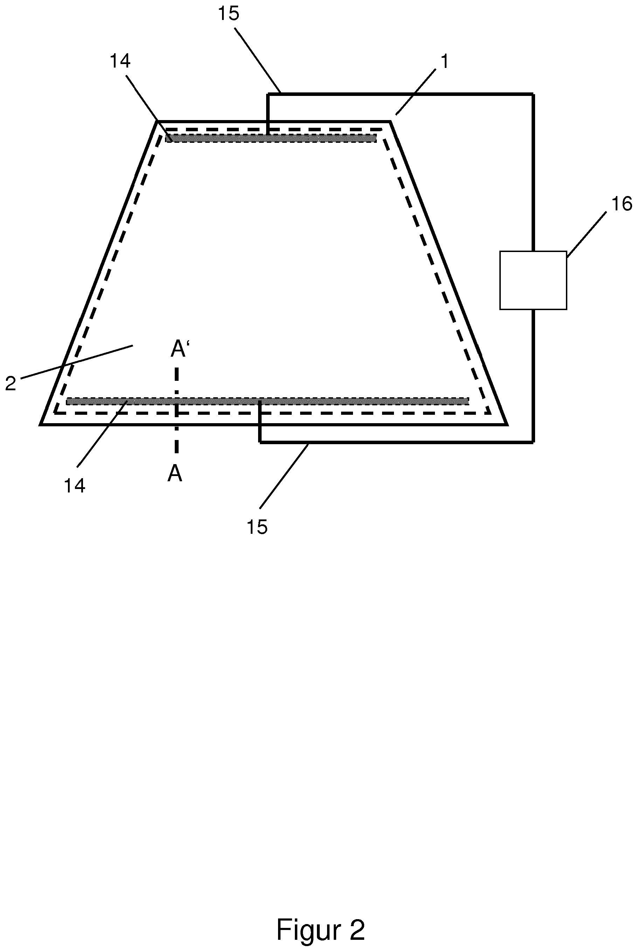

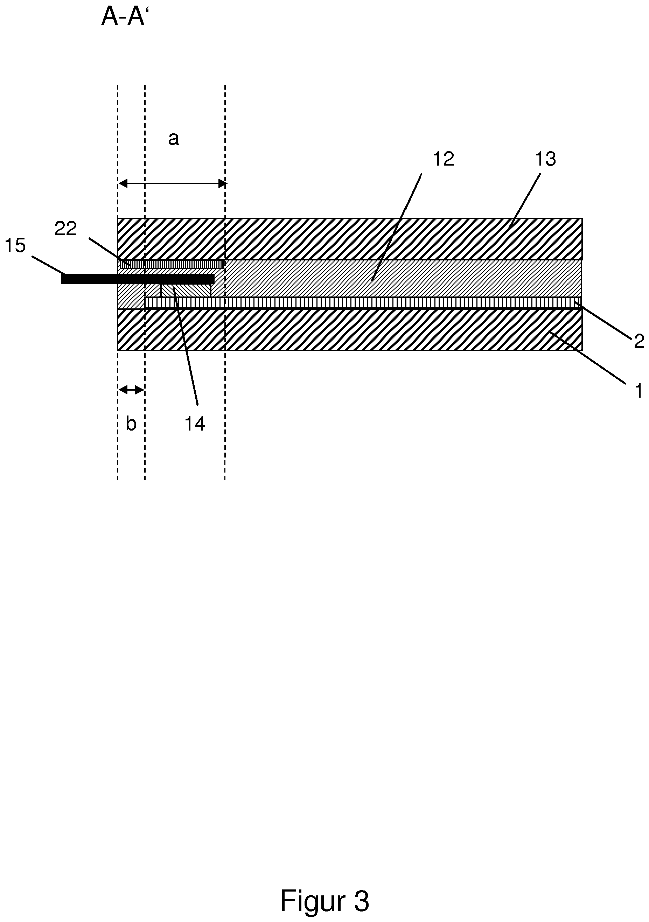

Fig. 2 und Fig. 3 zeigen je ein Detail der transparenten Scheibe als Teil der Verbundscheibe. Das transparente Substrat 1 ist über eine thermoplastische Zwischenschicht 12 mit einer zweiten Scheibe 13 verbunden. Figur 2 zeigt eine Draufsicht auf die von der thermoplastischen Zwischenschicht abgewandte Oberfläche des transparenten Substarts 1. Das transparente Substrat 1 ist die dem Innenraum des Personenkraftwagens zugewandte Scheibe. Das transparente Substrat 1 und die zweite Scheibe 13 enthalten Floatglas und weisen eine Dicke von jeweils 2,1 mm auf. Die thermoplastische Zwischenschicht 12 enthält Polyvinylbutyral (PVB) und weist eine Dicke von 0,76 mm auf.

Auf die zur thermoplastischen Zwischenschicht 12 hingewandte Oberfläche es transparenten Substrats 1 ist die elektrisch leitfähige Beschichtung 2 aufgebracht. Die elektrisch leitfähige Beschichtung 2 ist eine elektrisch beheizbare Beschichtung mit einer entsprechenden elektrischen Kontaktierung. Die elektrisch leitfähige Beschichtung 2 erstreckt sich über die gesamte Oberfläche des transparenten Substrats 1 abzüglich eines umlaufenden rahmenförmigen beschichtungsfreien Bereichs mit einer Breite b von ca. 8 mm. Der beschichtungsfreie Bereich dient der elektrischen Isolierung zwischen der spannungsführenden elektrischen Beschichtung 2 und der Fahrzeugkarosserie. Der beschichtungsfreie Bereich ist durch Verklebungen mit der Zwischenschicht 12 hermetisch versiegelt, um die elektrisch leitfähige Beschichtung 2 vor Beschädigung und Korrosion zu schützen.

Am äußeren oberen und unteren Rand des transparenten Substrats 1 ist zur elektrischen Kontaktierung der elektrisch leitfähigen Beschichtung 2 jeweils ein Sammelleiter 14 angeordnet. Die Sammelleiter 14 wurden mittels einer leitfähigen Silberpaste auf die elektrisch leitfähige Beschichtung 2 aufgedruckt und eingebrannt. Die Schichtdicke der eingebrannten Silber-Paste beträgt 15 µm. die Sammelleiter 14 sind elektrisch leitend mit den darunterliegenden Bereichen der elektrisch leitfähigen Beschichtung 2 verbunden.

Der Sammelleiter 14 ist jeweils mit einer Zuleitung 15 verlötet. Die Zuleitungen 15 bestehen aus verzinnten Kupferfolien mit einer Breite von 10 mm und einer Dicke von 0,3 mm. Die elektrisch beheizbare Beschichtung 2 ist über die Sammelleiter 14 und die Zuleitungen 15 mit einer Spannungsquelle 16 verbunden. Die Spannungsquelle 16 ist beispielsweise die 14 V, 24 V oder 40 V Bordspannung eines Kraftfahrzeugs.

Auf der zweiten Scheibe 13 ist am Rand der thermoplastischen Zwischenschicht 12 hingewandten Oberfläche eine opake Farbschicht mit einer Breite a von 20 mm als Abdeckdruck 22 rahmenförmig aufgebracht. Der Abdeckdruck 22 verdeckt die Sicht auf den Klebestrang, mit dem die transparente Scheibe in die Fahrzeugkarosserie eingeklebt wird. Der Abdeckdruck 22 dient gleichzeitig als Schutz des Klebers vor UV-Strahlung und damit als Schutz vor vorzeitiger Alterung des Klebers. Des Weiteren werden die Sammelleiter 14 und die Zuleitungen 15 durch den Abdeckdruck 22 verdeckt.

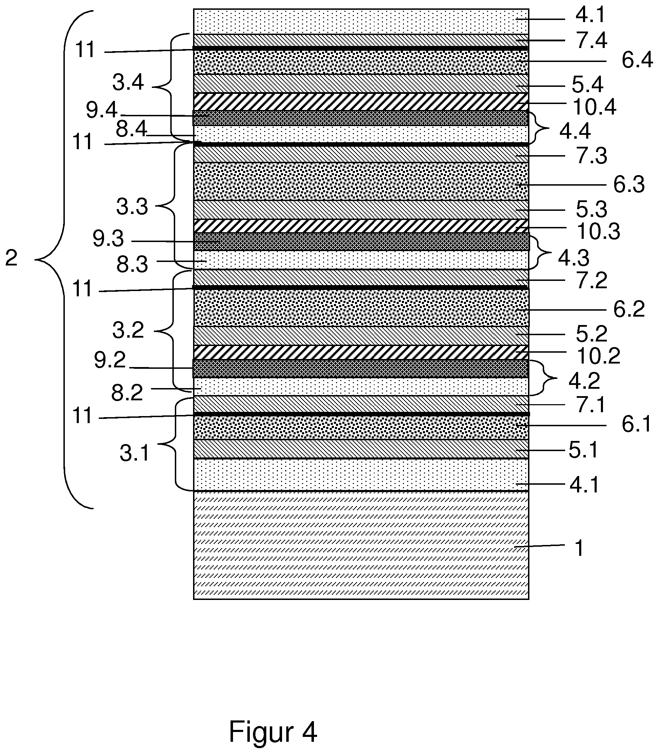

Fig. 4 zeigt eine Querschnitt durch eine Ausgestaltung der erfindungsgemäßen transparenten Scheibe mit dem transparenten Substrat 1 und der elektrisch leitfähigen Beschichtung 2.

Die elektrisch beheizbare Beschichtung 2 umfasst vier funktionelle Schichten 3 (3.1, 3.2, 3.3 und 3.4), die flächendeckend übereinander angeordnet sind. Jede funktionelle Schicht 3 umfasst
- eine Schicht optisch hochbrechenden Materials 4 (4.1, 4.2, 4.3 und 4.4), die Siliziumnitrid (Si3N4) enthält,
- eine erste Anpassungsschicht 5 (5.1, 5.2, 5.3 und 5.4), die Zinkoxid (ZnO) enthält,
- eine elektrisch leitfähige Schicht 6 (6.1, 6.2, 6.3, 6.4), die Silber oder eine silberhaltige Legierung enthält,
- eine zweite Anpassungsschicht 10 (10.1, 10.2, 10.3 und 10.4), die Zinkoxid (ZnO) enthält.

Die Schichten sind in der angegebenen Reihenfolge mit wachsendem Abstand zum Substrat 1 angeordnet. Oberhalb der obersten funktionellen Schicht 3.4 ist eine weitere Schicht 4.1 optisch hochbrechenden Materials mit einem Brechungsindex 1,9 bis 2,1 vorgesehen. Diese weitere Schicht und die unterste Schicht der Beschichtung 2 enthalten jeweils Siliziumnitrid (Si₃N₄) als optisch hochbrechendes Material mit einer Schichtdicken von 10 nm bis 50 nm. Die Verwendung von Siliziumnitrid als Abdeckschicht schützt die darunter angeordneten Schichten.

Die erste Anpassungsschicht 5 und die zweite Anpassungsschichten 7 enthalten Zinkoxid (ZnO) mit einem Brechungsindex 1,8 bis 2,0 und weisen Schichtdicken von 2 nm bis 20 nm, vorzugsweise 5 - 10 nm, auf.

Jede funktionelle Schicht 3 der elektrischen leitfähigen Beschichtung 2 weist eine zwischen zwei elektrisch leitfähigen Schichten 6 angeordnete Schicht 4.2, 4.3, 4.4 optisch hochbrechenden Materials auf, die eine Schicht 8.2, 8.3, 8.4 eines dielektrischen Materials mit einem Brechungsindex 1,9 bis 2,1 und eine Schicht 9.2, 9.3, 9.4 eines optisch hochbrechenden Materials mit einem Brechungsindex 2, 1 bis 2,3 umfasst.

Die Schicht 8.2, 8.3, 8.4 eines dielektrischen Materials mit einem Brechungsindex kleiner oder gleich 2,1 enthält Siliziumnitrid und weist eine Schichtdicke von 10 nm bis 50 nm, insbesondere 20 nm bis 40 nm, auf.

Die Schicht 9.2, 9.3, 9.4 eines optisch hochbrechenden Materials mit einem Brechungsindex größer oder gleich 2, 1 enthält Silizium-Zirkonium-Mischnitrid (SiZrNx) und weist Schichtdicken von 10 nm bis 50 nm, besonders bevorzugt 15 nm bis 30 nm, auf.

Die elektrisch leitfähige Schichten 6 (6.1, 6.2, 6.3, 6.4) enthalten Silber und weisen Schichtdicken von 5 nm bis 25 nm. Besonders bevorzugt sind Schichtdicken von 11 nm bis 18 nm. Die Gesamtschichtdicke aller elektrisch leitfähigen Schichten 6 beträgt 57 nm. Dabei sollte die Silberverteilung ca. 20% in (6.1) / ca. 30% in (6.2) und jeweils ca. 25% in (6.3) und (6.4) betragen um ein farbneutrale (weiße) Reflektion an der Beschichtung selbst unter den genannten Bedingungen (65° / s-Polarisation) zu erreichen.

Zwischen jeder elektrisch leitfähigen Schicht 6 (6.1, 6.2, 6.3, 6.4) und der darüber angeordneten zweiten Anpassungsschicht 7 ist eine Blockerschicht 11 angeordnet. Die Blockerschicht 11 besteht beispielsweise aus einer 0,2 nm bis 0.4 nm dicken Schicht, die Nickel, Chrom oder Legierungen davon enthält und mittels magnetfeldunterstützter Kathodenzerstäubung abgeschieden wurde.

Zwischen zwei elektrisch leitfähigen Schichten 6 ist jeweils eine Glättungsschicht 10.2, 10.3, 10.4 vorgesehen, die jeweils unterhalb einer der ersten Anpassungsschichten 5.2, 5.3, 5.4 angeordnet ist. Die Glättungschichten 10.2, 10.3, 10.4 enthalten Zink-Zinn-Mischoxid (ZnSnO) und weisen Schichtdicken von 2 -20 nm, vorzugsweise 5-10 nm, auf.

Die genaue Schichtfolge mit Schichtdicken ist in Tabelle 1 dargestellt.

**Tabelle 1**

| | Bezugszeichen | | Bezugszeichen | Schichtdicke |
|---|---|---|---|---|
| Si3N4 | 4.1 | | | 20 nm - 40 nm |
| ZnO | 10.4 | | 3.4 | 5 nm - 10 nm |
| NiCr | 11 | | | 0.2 - 0.4 nm |
| Ag | 6.4 | | | 14 nm |
| ZnO | 5.4 | | | 5 nm - 10 nm |
| ZnSnO | 10.4 | | | 5 nm - 10 nm |
| SiZrN | 9.4 | 4.4 | | 15 nm - 30 nm |
| Si3N4 | 8.4 | | | 20 nm - 40 nm |
| ZnO | 10.3 | | 3.3 | 5 nm - 10 nm |
| NiCr | 11 | | | 0.2 -0.4 nm |
| Ag | 6.3 | | | 14 nm |
| ZnO | 5.3 | | | 5 nm - 10 nm |
| ZnSnO | 10.3 | | | 5 nm - 10 nm |
| SiZrN | 9.3 | 4.3 | | 15 nm - 30 nm |
| Si3N4 | 8.3 | | | 20 nm - 40 nm |
| ZnO | 7.2 | | 3.2 | 5 nm - 10 nm |
| NiCr | 11 | | | 0.2 - 0.4 nm |
| Ag | 6.2 | | | 17 nm |
| ZnO | 5.2 | | | 5 nm - 10 nm |
| ZnSnO | 10.2 | | | 5 nm - 10 nm |
| SiZrN | 9.2 | 4.2 | | 15 nm - 30 nm |
| Si3N4 | 8.2 | | | 20 nm - 40 nm |
| ZnO | 7.1 | | 3.1 | 5 nm - 10 nm |
| NiCr | 11 | | | 0.2 nm - 0.4 nm |
| Ag | 6.1 | | | 12 nm |
| ZnO | 5.1 | | | 5 nm - 10 nm |
| Si3N4 | 4.1 | | | 20 nm - 40 nm |
| Glas als Substrat | 1 | | | 2,1 mm |

Die Schicht optisch hochbrechenden Materials 4, die Glättungsschicht 10, die Anpassungsschicht 5 und 7 und die elektrisch leitfähige Schicht 6 wurden durch Kathodenstrahlzerstäubung abgeschieden. Das Target zur Abscheidung der Anpassungsschicht 5 und 7 enthielt 92 Gew. % Zinkoxid (ZnO). Das Target zur Abscheidung der Glättungsschicht 10 enthielt 68 Gew. % Zinn, 30 Gew. % Zink. Das Target zur Abscheidung der Schicht optisch hochbrechenden Materials 4 enthielt 52,9 Gew. % Silizium, 43,8 Gew. % Zirkonium. Die Abscheidung der Glättungsschicht 10 erfolgte unter Zugabe von Sauerstoff als Reaktionsgas während der Kathodenzerstäubung. Die Abscheidung der Schicht optisch hochbrechenden Materials 4 erfolgte unter Zugabe von Stickstoff als Reaktionsgas während der Kathodenzerstäubung.

Es zeigen:
- (1): transparente Substrat
- (2): elektrisch leitfähige Beschichtung
- (3), (3.1), (3.2), (3.3), (3.4): funktionelle Schichten
- (4), (4.1), (4.2), (4.3), (4.4): eine Schicht optisch hochbrechenden Materials
- (5), (5.1), (5.2), (5.3), (5.4): erste Anpassungsschicht
- (6), (6.1), (6.2), (6.3), (6.4): elektrisch leitfähige Schicht
- (7), (7.1), (7.2), (7.3), (7.4): zweite Anpassungsschicht
- (8): Schicht eines dielektrischen Materials mit Brechungsindex ≤ 2,1
- (9): Schicht optisch hochbrechenden Materials eines dielektrischen Materials mit Brechungsindex ≥ 2,1
- (10), (10.2), (10.3), (10.4): Glättungsschicht
- (11): Blockerschicht
- (12): Zwischenschicht
- (13): zweite Scheibe
- (14): Sammelleiter
- (15): Zuleitung
- (16): Spannungsquelle
- (17): bildgebende Einheit
- (18): Optikmodul
- (19): Verbundscheibe
- (20): Auge eines PKW-Fahrers
- (21): Head-Up-Display System
- (22): Abdeckdruck
- (23): Bild
- a: Breite des durch (16) abgedeckten Bereichs
- b: Breite der Randentschichtung
- A-A': Schnittlinie

## Patentansprüche

1. Head-Up-Display System umfassend eine bildgebende Einheit zur Erzeugung eines Bildes und eine Reflektionsfläche, wobei die Reflektionsfläche zur Reflexion zumindest eines Teils des Bildes (23) vorgesehen ist, wobei die Reflektionsfläche eine transparente Scheibe umfasst, die ein transparentes Substrat (1) und mindestens eine elektrisch leitfähige Beschichtung (2) mit mindestens einer funktionellen Schicht (3) auf mindestens einer Oberfläche des transparenten Substrats (1) aufweist, **dadurch gekennzeichnet, dass** die elektrisch leitfähige Beschichtung (2) mindestens vier übereinander angeordnete funktionelle Schichten (3.1, 3.2, 3.3, 3.4) aufweist, wobei jede funktionelle Schicht (3) mindestens umfasst
• eine Schicht (4) optisch hochbrechenden Materials mit einem Brechungsindex > 1,3, wobei die Schicht (4) optisch hochbrechenden Materials zumindest Siliziumnitrid aufweist,
• oberhalb der Schicht optisch hochbrechenden Materials (4) eine erste Anpassungsschicht (5),
• oberhalb der ersten Anpassungsschicht (5) eine elektrisch leitfähige Schicht (6), wobei zumindest eine funktionelle Schicht (3), bevorzugt jede funktionelle Schicht (3), eine an die elektrisch leitfähige Schicht (6) angrenzende Blockerschicht (11) aufweist und die Blockerschicht (11) zumindest Nickel, Chrom oder Legierungen davon enthält,
• oberhalb der elektrisch leitfähigen Schicht (6) eine zweite Anpassungsschicht (7) und zumindest eine der zwischen zwei elektrisch leitfähigen Schichten (6) angeordneten Schichten (4) optisch hochbrechenden Materials
• eine Schicht eines dielektrischen Materials (8) mit einem Brechungsindex kleiner oder gleich als 2, 1, das aus Siliziumnitrid besteht und
• eine Schicht eines optisch hochbrechenden Materials (9) mit einem Brechungsindex größer oder gleich 2, 1 umfasst.

2. Head-Up-Display System nach Anspruch 1, wobei jede funktionelle Schicht (3) mindestens eine elektrisch leitfähige Schicht (6.1, 6.2, 6.3, 6.4) umfasst.

3. Head-Up-Display System nach Anspruch 2, wobei die elektrisch leitfähige Schicht (6) zumindest Silber oder eine silberhaltige Legierung aufweist.

4. Head-Up-Display System nach Anspruch 2, wobei jede elektrisch leitfähige Schicht (61, 6.2, 6.3, 6.4) die gleiche Schichtdicke aufweist.

5. Head-Up-Display System nach Anspruch 2, wobei eine elektrisch leitfähige Schicht (6.1) eine Schichtdicke aufweist, die halb so groß ist wie die Schichtdicke einer zweiten elektrisch leitfähigen Schicht (6.2, 6.3, 6.4).

6. Head-Up-Display System nach Anspruch 1, wobei das transparente Substrat (1) über zumindest eine thermoplastische Zwischenschicht (12) mit einer zweiten Scheibe (13) zu einer Verbundscheibe verbunden ist.

7. Head-Up-Display System nach Anspruch 6 wobei die Verbundscheibe zur Reflektion von s-polarisiertem Licht vorgesehen ist.

8. Head-Up-Display System nach Anspruch 1 bis 7, wobei die zwischen zwei elektrisch leitfähigen Schichten (6) angeordneten Schicht (9) optisch hochbrechenden Materials Silizium-Zirkonium-Mischnitrid aufweist

9. Kraftfahrzeug mit einem Head-Up-Display System nach Anspruch 1 bis 8.

10. Verfahren zur Erzeugung eines Bildes auf einer Reflektionsfläche mittels eines Head-Up-Display Systems nach Anspruch 1 bis 8, wobei als Reflektionsfläche eine transparente Scheibe umfassend ein transparentes Substrat (1) und mindestens eine elektrisch leitfähige Beschichtung (2) mit einer funktionellen Schicht (3) auf mindestens einer Oberfläche des transparenten Substrats (1) verwendet wird.

11. Verwendung des Head-Up-Display Systems nach einem der Ansprüche 1 bis 8 in Fahrzeugen, insbesondere in Kraftfahrzeugen.

## Claims

1. Head-up display system comprising an imaging unit for generating an image and a reflection surface, wherein the reflection surface is provided for reflecting at least a part of the image (23), wherein the reflection surface comprises a transparent pane
that has a transparent substrate (1) and at least one electrically conductive coating (2) with at least one functional layer (3) on at least one surface of the transparent substrate (1), **characterized in that** the electrically conductive coating (2) has at least four functional layers (3.1, 3.2, 3.3, 3.4) arranged one atop another, wherein each functional layer (3) comprises at least
• a layer (4) of optically highly refractive material with a refractive index ≥ 1.3, wherein the layer (4) of optically highly refractive material has at least silicon nitride,
• above the layer of optically highly refractive material (4), a first matching layer (5),
• above the first matching layer (5), an electrically conductive layer (6), wherein at least one functional layer (3), preferably each functional layer (3), has a blocking layer (11) adjacent the electrically conductive layer (6), and the blocking layer (11) contains at least nickel, chromium, or alloys thereof,
• above the electrically conductive layer (6), a second matching layer (7) and at least one of the layers (4) of optically highly refractive material arranged between two electrically conductive layers (6) comprises
• a layer of a dielectric material (8) with a refractive index less than or equal to 2.1 that is made of silicon nitride, and
• a layer of a of optically highly refractive material (9) with a refractive index greater than or equal to 2.1.

2. Head-up display system according to claim 1, wherein each functional layer (3) includes at least one electrically conductive layer (6.1, 6.2, 6.3, 6.4).

3. Head-up display system according to claim 2, wherein the electrically conductive layer (6) has at least silver or a silver-containing alloy.

4. Head-up display system according to claim 2, wherein each electrically conductive layer (61 [sic: 6.1], 6.2, 6.3, 6.4) has the same layer thickness.

5. Head-up display system according to claim 2, wherein one electrically conductive layer (6.1) has a layer thickness that is half as large as the layer thickness of a second electrically conductive layer (6.2, 6.3, 6.4).

6. Head-up display system according to claim 1, wherein the transparent substrate (1) is joined to a second pane (13) via at least one thermoplastic intermediate layer (12) to form a composite pane.

7. Head-up display system according to claim 6, wherein the composite pane is provided for reflecting s-polarized light.

8. Head-up display system according to claim 1 through 7, wherein the layer (9) of optically highly refractive material arranged between two electrically conductive layers (6) has mixed silicon/zirconium nitride.

9. Motor vehicle having a head-up display system according to claim 1 through 8.

10. Method for generating an image on a reflection surface using a head-up display system according to claim 1 through 8, wherein a transparent pane comprising a transparent substrate (1) and at least one electrically conductive coating (2) having a functional layer (3) on at least one surface of the transparent substrate (1) is used as the reflection surface.

11. Use of the head-up display system according to one of claims 1 through 8 in vehicles, in particular in motor vehicles.

## Revendications

1. - Système d'affichage tête haute comportant une unité d'imagerie pour la génération d'une image et d'une surface de réflexion, la surface de réflexion étant prévue pour la réflexion d'au moins une partie de l'image (23), la surface de réflexion comportant une vitre transparente qui présente un substrat transparent (1) et au moins un revêtement (2) conducteur de l'électricité avec au moins une couche fonctionnelle (3) sur au moins une surface du substrat transparent (1),
**caractérisé par le fait que** le revêtement (2) conducteur de l'électricité présente au moins quatre couches fonctionnelles (3.1, 3.2, 3.3, 3.4) superposées, chaque couche fonctionnelle (3) comportant au moins
• une couche (4) de matériau à haut indice de réfraction optique avec un indice de réfraction > 1,3, la couche (4) de matériau à haut indice de réfraction optique présentant au moins du nitrure de silicium ;
• au-dessus de la couche (4) de matériau à haut indice de réfraction optique, une première couche d'adaptation (5) ;
• au-dessus de la première couche d'adaptation (5), une couche (6) conductrice de l'électricité, au moins une couche fonctionnelle (3), de préférence chaque couche fonctionnelle (3), présentant une couche de blocage (11) adjacente à la couche (6) conductrice de l'électricité et la couche de blocage (11) contenant au moins du nickel, du chrome ou des alliages de ceux-ci ;
• au-dessus de la couche (6) conductrice de l'électricité, une deuxième couche d'adaptation (7) et au moins l'une des couches (4) de matériau à haut indice de réfraction optique disposées entre deux couches (6) conductrices de l'électricité ;
• une couche d'un matériau diélectrique (8) avec un indice de réfraction inférieur ou égal à 2,1, qui se compose de nitrure de silicium ; et
• une couche d'un matériau à haut indice de réfraction optique (9) ayant un indice de réfraction supérieur ou égal à 2,1.

2. - Système d'affichage tête haute selon la revendication 1, dans lequel chaque couche fonctionnelle (3) comporte au moins une couche (6.1, 6.2, 6.3, 6.4) conductrice de l'électricité.

3. - Système d'affichage tête haute selon la revendication 2, dans lequel la couche (6) conductrice de l'électricité présente au moins de l'argent ou un alliage contenant de l'argent.

4. - Système d'affichage tête haute selon la revendication 2, dans lequel chaque couche (6.1, 6.2, 6.3, 6.4) conductrice de l'électricité présente la même épaisseur de couche.

5. - Système d'affichage tête haute selon la revendication 2, dans lequel une couche (6.1) conductrice de l'électricité présente une épaisseur de couche qui est deux fois plus petite que l'épaisseur de couche d'une deuxième couche (6.2, 6.3, 6.4) conductrice de l'électricité.

6. - Système d'affichage tête haute selon la revendication 1, dans lequel le substrat transparent (1) est relié à une seconde vitre (13) par au moins une couche intermédiaire thermoplastique (12) pour former une vitre feuilletée.

7. - Système d'affichage tête haute selon la revendication 6, dans lequel la vitre feuilletée est prévue pour réfléchir de la lumière polarisée s.

8. - Système d'affichage tête haute selon l'une des revendications 1 à 7, dans lequel la couche (9) de matériau à haut indice de réfraction optique disposée entre deux couches (6) conductrices de l'électricité présente du nitrure mixte de silicium et de zirconium.

9. - Véhicule automobile équipé d'un système d'affichage tête haute selon l'une des revendications 1 à 8.

10. - Procédé de génération d'une image sur une surface de réflexion au moyen d'un système d'affichage tête haute selon l'une des revendications 1 à 8, dans lequel on utilise, comme surface de réflexion, une vitre transparente comportant un substrat transparent (1) et au moins un revêtement (2) conducteur de l'électricité avec une couche fonctionnelle (3) sur au moins une surface du substrat transparent (1).

11. - Utilisation du système d'affichage tête haute selon l'une des revendications 1 à 8 dans des véhicules, en particulier dans des véhicules automobiles.
